(19) Europäisches Patentamt
European Patent Office
Office européen des brevets

(11) Veröffentlichungsnummer : **0 002 514**
**B2**

(12) **NEUE EUROPÄISCHE PATENTSCHRIFT**

(45) Veröffentlichungstag der neuen Patentschrift : **07.08.85**

(21) Anmeldenummer : **78101633.2**

(22) Anmeldetag : **09.12.78**

(51) Int. Cl.⁴ : **C 08 K 5/03**, C 08 L 23/02, C 08 L 25/04, C 08 L 67/00, C 08 L 77/00

(54) **Verfahren zum Flammfest- Ausrüsten von thermoplastischen Kunststoffen.**

(30) Priorität : **17.12.77 DE 2756375**

(43) Veröffentlichungstag der Anmeldung : **27.06.79 Patentblatt 79/13**

(45) Bekanntmachung des Hinweises auf die Patenterteilung : **11.02.81 Patentblatt 81/06**

(45) Bekanntmachung des Hinweises auf die Entscheidung über den Einspruch : **07.08.85 Patentblatt 85/32**

(84) Benannte Vertragsstaaten :
**BE CH DE FR GB NL**

(56) Entgegenhaltungen :
**EP-A- 0 000 141**
**DE-A- 2 132 358**
**DE-A- 2 515 473**
**DE-B- 2 703 419**
**US-A- 3 474 067**
**US-A- 3 956 139**
**Kirk-Othmer, "Encyclopedia of Chem. Techn" 11 (1953), S. 932, 933**
**SPE-Journal, Sept. 1962, S. 1184-1193**

(73) Patentinhaber : **BASF Aktiengesellschaft**
**Carl-Bosch-Strasse 38**
**D-6700 Ludwigshafen (DE)**

(72) Erfinder : **Theysohn, Rainer, Dr.**
**Bruesseler Ring 38**
**D-6700 Ludwigshafen (DE)**
Erfinder : **Seiler, Erhard, Dr.**
**Erpolzheimer Strasse 1**
**D-6700 Ludwigshafen (DE)**
Erfinder : **Seydl, Wolfgang, Dr.**
**Bensheimer Ring 25**
**D-6710 Frankenthal (DE)**
Erfinder : **Penzien, Klaus, Dr.**
**Bensheimer Ring 18**
**D-6710 Frankenthal (DE)**



Jouve, 18, rue St-Denis, 75001 Paris, France

**Beschreibung**

Die Erfindung betrifft ein Verfahren zur Flammfest-Ausrüsten von thermoplastischen Kunststoffen mit einem Flammschutzmittelkonzentrat, das bromiertes Oligomerstyrol, ein synergistisch wirkendes Metalloxid sowie gegebenenfalls Füllstoffe enthält.

Brennbare Kunststoffe lassen sich bekanntlich durch Einarbeiten von Halogenverbindungen, gegebenenfalls in Kombination mit synergistisch wirkenden Metallverbindungen, flammwidrig ausrüsten. Als sehr wirksames Flammschutzmittel hat sich beispielsweise bromiertes Oligomerstyrol, wie es in den DE-A 2 515 473 und 2 703 419 beschrieben ist, bewährt. Aus wirtschaftlichen Gründes ist es wünschenswert, die für eine ausreichende Flammschutzwirkung nötige Menge am Flammschutzmittel möglichst gering zu halten ; außerdem hat es sich gezeigt, daß die mechanischen Eigenschaften der Kunstoffe umso weniger beeinträchtigt werden, je kleiner der Anteil an Flammschutzmitteln in der thermoplastischen Formmasse ist.

Der Erfindung lag daher die Aufgabe zugrunde, durch Reduzierung der Menge an Flammschutzkomponenten sowohl ein Verbilligung als auch eine Verbesserung der mechanischen Eigenschaften von flammgeschützten thermoplastischen Formmassen zu erreichen, ohne daß die Flammfest-Eingenschaften negativ beeinflußt werden.

Es wurde gefunden, daß homogene Mischungen aus bromiertem Oligomerstyrol, einem Metalloxid und Füllstoffen diese Vorteile aufweisen.

Gegenstand der Erfindung ist demgemäß ein Verfahren zum Flammfest-Ausrüsten von thermoplastischen Kunstoffen mit einer homogenen Mischung aus 10 bis 80 Gew.% eines bromierten Oligomerstyrols, 5 bis 50 Gew.% eines synergistisch wirkenden Metalloxids, und 10 bis 60 Gew.% gerüstbildenden Füllstoffen, die in Form eines homogenen schmelzgemischten Konzentrats eingesetzt wird.

In der DE-A 2 608 833 sind Flammschutzmittelkonzentrate aus 50 bis 95 Gew.% eines Flammschutzmittels und Synergisten und 5 bis 50 Gew.% eines Thermoplasten als Bindemittel beschrieben. Das Flammschutzmittel wird als feinteiliges Pulver homogen in der Thermoplastschmelze verteilt ; es soll dabei nicht schmelzen. Derartige Konzentrate sollen einfacher als pulverförmige Flammschutzmittel in Kunststoffe einarbeitbar sein ; eine Verringerung der einzusetzenden Menge an Flammschutzmittel wird dabei jedoch nicht erreicht.

Die als Flammschutzmittel eingesetzten bromierten Oligostyrole haben vorzugsweise einen mittleren Polymerisationsgrad (Zahlenmittel) zwischen 3 und 100, vorzugsweise zwischen 5 und 60, gemessen dampfdruckosmometrisch in Toluol. Auch cyclische Oligomere sind geeignet. Gemäß einer bevorzugten Ausführungsform der Erfindung weisen die einzusetzenden bromierten oligomeren Styrole die nachstehende Formel auf, in der R Wasserstoff oder ein aliphatischer Rest, insbesondere ein Alkylrest, wie z. B. $CH_3$ oder $C_2H_5$ und n die Anzahl der sich wiederholenden Kettenbausteine bedeuten. R' kann sowohl Wasserstoff als auch Brom, als auch ein Fragment eines üblichen Radikalbildners sein :

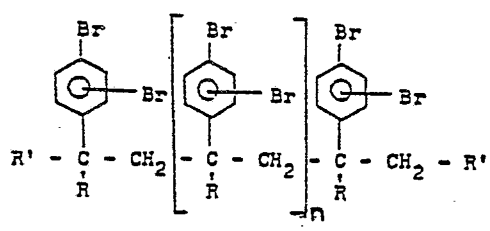

Der Wert für n kann 1 bis 98, vorzugsweise 1 bis 58, betragen. Die bromierten Oligostyrole enthalten im Schnitt zwischen 40 und 80 Gew.% Brom. Bevorzugt ist ein Produkt, das überwiegend aus Oligobromstyrol besteht. Die Substanzen sind unzersetzt schmelzbar und z. B. in Tetrahydrofuran löslich. Sie können hergestellt werden entweder durch Kernbromierung von — gegebenenfalls aliphatisch hydrierten — Styrololigomeren, wie sie z. B. durch thermische Polymerisation von Styrol erhalten werden nach der DE-A 2 537 385 oder durch radikalische Oligomerisierung von geeigneten bromierten Styrolen. Die Herstellung des Flammschutzmittels kann auch durch ionische Oligomerisation von Styrol, und anschließender Bromierung erfolgen.

Als Synergisten für die bromierten Oligomerstyrole kommen praktisch alle bekannten in Frage. Besonders bevorzugt ist Antimontrioxid, aber auch Zinkoxid, Bleioxid und Eisenoxid sind geeignet, ebenso Mischungen von Metalloxiden. Die Menge an Metalloxid im Konzentrat liegt zwischen 5 und 40 Gew.%, vorzugsweise zwischen 10 und 40 Gew.%.

Die homogenen Mischungen enthalten anorganische, gerüstbildende, globuläre oder blättchenförmige Füllstoffe, insbesondere Silikate, Carbonate oder Sulfate beträgt. Ihre Menge 10 bis 60 Gew.%. Insbesondere kommen in Frage : Talkum, Wollastonit, Glimmer, Quarz, Kaolin, calcinierter Kaolin, Kreide und Bariumsulfat. Die anorganischen Füllstoffe können mit den üblichen Haftvermittlern, z. B. auf Silanbasis und/oder mit zusätzlichen Schlichtemitteln oberflächenbehandelt sein.

Außer den genannten Komponenten kann das Flammschutzmittelkonzentrat noch Stabilisatoren gegen die thermische Zersetzung des Flammschutzmittels, Polymerstabilisatoren, Gleitmittel, niedermolekulare Verarbeitungshilfsmittel sowie Farbstoffe und Pigmente in üblichen Mengen enthalten.

Die homogenen Flammschutzmittelkonzentrate werden zweckmäßig so hergestellt, daß man das bromierte Oligomerstyrol bei Temperaturen von 140 bis 250 °C aufschmilzt und in die schmelzflüssige Masse das Metalloxid und die gerüstbildenden Füllstoffe unter Scherung so einarbeitet, daß eine homogene Mischung entsteht. Hierfür geeignet sind z. B. Schneckenkneter oder andere Mischaggregate, wie sie auch für die Konfektionierung von Thermoplasten verwendet werden. Das schmelzflüssige homogene Gemisch wird nach dem Austragen aus dem Mischaggregat abgekühlt, z. B. auf ein gekühltes Metallband gegeben, das erhaltene feste Produkt wird dann zerkleinert und anschließend auf eine gewünschte Korngröße zwischen 10 und 10 000 μm gemahlen.

Die erfindungsgemäß eingesetzten Flammschutzmittelkonzentrate können praktisch bei allen thermoplastisch verarbeitbaren Kunststoffen angewandt werden. Bevorzugt sind Polyamide, Polyester, Styrolpolymere und Polyolefine. Die Flammschutzmittelkonzentrate werden den Kunststoffen bevorzugt in Mengen von 10 bis 50 Gew.% zugemischt. Die Polyamide sind vorzugsweise gesättigte lineare Homopolyamide, wie z. B. Polycaprolactam (Polyamid-6), Polyhexamethylenadipinsäureamid (Polyamid-6,6), Polyhexamethylensebacinsäureamid, Polylaurinlactam, Polyundecanamid ; ferner Homo- und Copolyamide, die unter Verwendung von Adipinsäure, Acelainsäure, Sebacinsäure, Dodecandisäure, Terephthalsäure einerseits und Hexamethylendiamin, Trimethylhexamethylendiamin, Bis-(4-amino-cyclohexyl)-methan, 2,2-Bis-(4-aminocyclohexyl)-propan andererseits hergestellt werden ; sowie Copolyamide, die durch Polykondensation von Lactam mit den obengenannten Dicarbonsäuren und Diamin erhalten werden, und Mischungen aus Polyamiden. Als lineare gesättigte Polyester kommen im Rahmen dieser Erfindung vorzugsweise Polybutylenterephthalat in Frage ; die Flammschutzmittelkonzentrate sind jedoch prinzipiell auch bei Polyäthylenterephthalat und Polypropylenterephthalat wirksam. Das Polybutylenterephthalat soll zum überwiegenden Teil aus Terephthalsäure und 1,4-Butandiol aufgebaut sein, wobei jedoch bis zu 15 Mol% der Terephthalsäure auch durch andere Dicarbonsäuren, wie Isophthalsäure, Naphthalendicarbonsäure, Adipinsäure oder Sebacinsäure ersetzt werden können und bis zu 15 % des Butandiols durch andere Glykole, wie Äthylenglykol oder Propylenglykol.

Als Styrolpolymerisate kommen Polystyrol, Styrol-Acrylnitril-Copolymerisate, die gegebenenfalls auch -Methylstyrol enthalten können, und schlagzäh modifizierte Styrol- und Styrol-Acrylnitril-Copolymerisate in Frage.

Unter den Olefinpolymerisaten sind bevorzugt Homopolymerisate des Äthylens und des Propylens, Äthylen-Propylen-Copolymerisate, sowie Copolymerisate des Äthylens mit Acryl- oder Vinylestern und Mischungen aus den genannten Polymeren.

Die Flammschutzmittelkonzentrat enthaltenden Formmassen können zusätlich verstärken wirkende Füllstoffe enthalten, vorzugsweise Silikate und Carbonate. Insbesondere kommen in Frage : Glasfasern, bevorzugt aus alkaliarmem E-Glas mit Durchmessern von 6 bis 20 μm, Kohlenstofffasern, K-Titanat-Fasern, Glaskugeln, Metall-Whiskers, Talkum, Wollastonit, Glimmer, Quarz, Kaolin, calcinierter Kaolin und Kreide. Die Menge dieser Zusatzstoffe kann bis zu 60 Gew.% betragen, sie liegt vorzugsweise zwischen 10 und 40 Gew.%. Sie sind vorteilhaft mit Haftvermittlern auf Silanbasis und/oder mit zusätzlichen Schlichtemitteln ausgerüstet.

Außer den genannten Füllstoffen können die Formassen noch weitere Zusätze, wie Stabilisatoren gegen thermische, thermooxidative und UV-Schädigung, Farbstoffe, Pigmente und Verarbeitungshilfsmittel, wie z. B. Wachse, Gleitmittel und Formtrennmittel, die ein störungsfreies Extrudieren und Spritzgießen gewährleisten, enthalten.

Die thermoplastischen Formmassen werden vorzugsweise durch Mischen von granulatförmigem Thermoplast mit dem erfindungsgemäßen Flammschutzmittelkonzentrat und anschließendem Aufschmelzen, gegebenenfalls Einverleiben der verstärkend wirkenden Füllstoffe und Homogenisieren in einem geeigneten Extruder, Auspressen, Kühlen, Granulieren und gegebenenfalls Trocknen hergestellt. Sie sind vor allen Dingen zur Herstellung von Spritzgußteilen, z. B. für die Elektroindustrie, geeignet.

Die in den Beispielen genannten Teile und Prozente beziehen sich auf das Gewicht.

## Beispiele

Um die erfindungsgemäßen Vorteile zu verdeutlichen, wurden folgende Versuche durchgeführt : Granulatförmiges thermoplastisches Polymerisat wurde bei Temperaturen gemäß Tabelle 1 auf einen Zweiwellenextruder aufgeschmolzen. In die Schmelze wurden die Flammschutzzuschläge gemäß Tabelle 2 zugegeben und E-Glasfasern hinzugefügt, so daß der Glasfasergehalt im Endprodukt 20 Gew.% betrug. Das homogenisierte, schmelzflüssige Gemisch wurde durch Düsen ausgepreßt, als Stränge abgezogen, gekühlt und granuliert. Aus dem Granulat wurden Prüfkörper in den Abmessungen 127 × 12,7 × 1,6 mm spritzgegossen, an denen das Brandverhalten in Anlehnung an die Vorschrift UL 94 von Underwriters Laboratories bestimmt wurde (Tabelle 3). Zudem wurden Prüfkörper spritzgegossen, an denen Schlagzähigkeit nach DIN 53 453 und Zugfestigkeit nach DIN 53 455 gemessen wurden (Tabelle 4). Zur Demonstration der erfindungsgemäßen Verbesserungen wurden in Vergleichsversuchen die Komponenten des

Flammschutzmittelkonzentrates in gleichen Mengen, aber nicht homogenen schmelzgemischt, sondern mechanisch vermischt, zugegeben.

Tabelle 1

| Thermoplast | Aufschmelztemp. |
|---|---|
| A Polyamid 6.6, relative Viskosität 2,65 (in 1 %iger Lösung in konzentrierter Schwefelsäure) | 280 °C |
| B Polybutylenterephthalat, relative Viskosität 1,65 (gemessen in 0,5 %iger Lösung in einer Mischung aus Phenol und o-Dichlorbenzol im Verhältnis 60 : 40) | 260 °C |
| C Styrol-Acrylnitril-Copolymerisat (30 % Acrylnitril) mit einem Schmelzindex von 1,5 (g/10′) bei 200 °C, 5 kg | 250 °C |

Tabelle 2

Flammschutzzuschläge

I homogenes schmelzgemischtes Konzentrat aus
40 Gewichtsteilen bromierten Oligomerstyrol
40 Gewichtsteilen Talkum
20 Gewichtsteilen Antimontrioxid

II mechanische Trockenmischung aus
40 Gewichtsteilen bromiertem Oligomerstyrol
40 Gewichtsteilen Talkum
20 Gewichtsteilen Antimontrioxid

Bromgehalt des bromierten Oligomerstyrols : 61 % mittlerer Oligomerisationsgrad : 10 (gemessen dampfdruckosmometrisch in Toluol), Schmelzpunkt 140 bis 160 °C.

Tabelle 3

Flammfesteigenschaften

| Thermoplast (nach Tab. 1) | Flammschutzzuschläge (nach Tab. 2) | mittlere Brennzeit von 10 Prüfkörpern sec |
|---|---|---|
| 50 Tle A | 30 Tle I | 0 |
| 50 Tle A | 30 Tle II | 12 |
| 55 Tle B | 25 Tle I | 4 |
| 55 Tle B | 25 Tle II | 13 |
| 55 Tle C | 25 Tle I | 1 |
| 55 Tle C | 25 Tle II | 10 |

Tabelle 4

Mechanische Eigenschaften bei Einstellungen mit vergleichbarem Brennverhalten

| Thermoplast (nach Tab. 1) | Flammschutz-zuschläge (nach Tab. 2) | mittl. Brenn-zeit von 10 Prüfkörpern sec | Schlag-zähig- $KJm^{-2}$ | Zug-festigkeit $Nmm^{-2}$ |
|---|---|---|---|---|
| 50 Tle A | 30 Tle I | 0 | 29 | 155 |
| 45 Tle A | 35 Tle II | 1 | 25 | 137 |
| 55 Tle B | 25 Tle I | 4 | 21 | 75 |
| 49 Tle B | 31 Tle II | 4 | 16 | 65 |
| 55 Tle C | 25 Tle I | 1 | 9 | 108 |
| 50 Tle C | 30 Tle II | 2 | 6 | 94 |

Wie aus den angeführten Beispielen ersichtlich ist, erhält man bei erfindungsgemäßer Verwendung eines homogenen schmelzgemischten Flammschutzmittelkonzentrates ein günstigeres Brandverhalten. Dadurch ist es möglich, die Menge an Flammschutzmittel zu reduzieren, wodurch die Gesamtmenge an Zuschlägen geringer wird, und die mechanischen Eigenschaften eine deutliche Verbesserung erfahren.

**Patentansprüche**

1. Verfahren zum Flammfest-Ausrüsten von thermoplastischen Kunststoffen mit einem Flammschutzmittelgemisch, bestehend aus

A. 10 bis 80 Gew.% eines bromierten Oligomerstyrols,

B. 5 bis 50 Gew.% eines synergistisch wirkenden Metalloxids,

C. 10 bis 60 Gew.% eines gerüstbildenden globulären oder blättchenförmigen anorganischen Füllstoffs, sowie gegebenenfalls

D. üblichen Stabilisatoren, Gleitmitteln, niedermolekularen Verarbeitungshilfsmitteln, Farbstoffen oder Pigmenten,

dadurch gekennzeichnet, daß man das Gemisch in Form eines homogenen, schmelzgemischten Konzentrats einsetzt.

2. Verfahren zum Flammfestausrüsten von thermoplastischen Kunststoffen nach Anspruch 1, dadurch gekennzeichnet, daß das bromierte Oligomerstyrol einen Polymerisationsgrad (Zahlenmittel) zwischen 3 und 100, und einen Bromgehalt zwischen 40 und 80 % hat.

3. Verfahren zum Flammfestausrüsten von thermoplastischen Kunststoffen nach Anspruch 1, dadurch gekennzeichnet, daß das synergistisch wirkende Metalloxid Antimontrioxid ist.

4. Verfahren zum Flammfestausrüsten von thermoplastischen Kunststoffen nach Anspruch 1, dadurch gekennzeichnet, daß das Gemisch als Komponente C ein Silikat, Carbonat oder Sulfat, vorzugsweise Talkum, enthält.

5. Verfahren zum Flammfestausrüsten von thermoplastischen Kunststoffen nach Anspruch 1, dadurch gekennzeichnet, daß das Flammschutzmittelkonzentrat dem thermoplastischen Kunststoff in Mengen von 10 bis 50 Gew.% zugesetzt wird.

6. Verfahren zum Flammfestausrüsten von thermoplastischen Kunststoffen nach Anspruch 1, dadurch gekennzeichnet, daß die thermoplastischen Kunststoffe Polyamide, lineare Polyester, Styrolpolymere oder Polyolefine sind, die gegebenenfalls bis zu 60 Gew.% verstärkend wirkender Füllstoffe enthalten.

**Claims**

1. Process for flameproofing thermoplastics by means of a mixture of flame retardants consisting of

A. 10 to 80 % by weight of a brominated oligomeric styrene,

B. 5 to 50 % by weight of a synergistically acting metal oxide, and

C. 10 to 60 % by weight of a skeleton-forming globular or leaf-shaped inorganic filler, with or without

D. conventional stabilizers, lubricants, low molecular weight processing aids, colorants or pigments,

characterized in that the mixture is used in the form of a homogeneous concentrate obtained by melt mixing.

2. Process for flameproofing thermoplastics as claimed in claim 1, characterized in that the brominated oligomeric styrene has a degree of polymerization (number average) of from 3 to 100 and a bromine content of from 40 to 80 %.

3. Process for flameproofing thermoplastics as claimed in claim 1, characterized in that the synergistically acting metal oxide is antimony trioxide.

4. Process for flameproofing thermoplastics as claimed in claim 1, characterized in that the mixture contains, as component C, a silicate, carbonate or sulfate, preferably talc.

5. Process for flameproofing thermoplastics as claimed in claim 1, characterized in that the concentrate of flame retardants is added to the thermoplastic in an amount of from 10 to 50 % by weight.

6. Process for flameproofing thermoplastics as claimed in claim 1, characterized in that the thermoplastics are polyamides, linear polyesters, styrene polymers or polyolefins which may or may not contain up to 60 % by weight of reinforcing fillers.

**Revendications**

1. Procédé d'ignifugation de résines thermoplastiques à l'aide d'un mélange de substances ignifugeantes, composé de :

A. 10 à 80 % en poids d'un oligomère d'un dérivé bromé du styrène ;

B. 5 à 50 % en poids d'un oxyde de métal à effet synergétique ;

C. 10 à 60 % en poids d'une matière de charge formant ossature, sous forme de particules sphériques ou lamellaires, ainsi éventuellement que

D. des stabilisants usuels, lubrifiants, adjuvants de transformation à faible poids moléculaire, colorants ou pigments,

caractérisé par le fait que le mélange est employé sous forme d'un concentré homogène préparé par homogénéisation des ingrédients fondus.

2. Procédé d'ignifugation de résines thermoplastiques suivant la revendication 1, caractérisé par le fait que l'oligomère du dérivé bromé du styrène possède un degré de polymérisation moyen (moyenne numérique) compris entre 3 et 100 et une teneur en brome de 40 à 80 % en poids.

3. Procédé d'ignifugation de résines thermoplastiques suivant la revendication 1, caractérisé par le fait que l'oxyde de métal à effet de potentialisation est le trioxyde d'antimoine.

4. Procédé d'ignifugation de résines thermoplastiques suivant la revendication 1, caractérisé par le fait que le mélange contient comme composant C un silicate, un carbonate ou un sulfate, de préférence du talc.

5. Procédé d'ignifugation de résines thermoplastiques suivant la revendication 1, caractérisé par le fait que le mélange de substances ignifugeantes est incorporé à la résine thermoplastique en une proportion comprise entre 10 et 50 % en poids.

6. Procédé d'ignifugation de résines thermoplastiques suivant la revendication 1, caractérisé par le fait que la résine thermoplastique est choisie parmi les polyamides, les polyesters linéaires, les polymères styréniques et les polyoléfines, auxquels peuvent être incorporés jusqu'à 60 % en poids de matières de charge renforçantes.